# EUROPEAN PATENT SPECIFICATION

(11) **EP 2 652 922 B1**
(45) Date of publication and mention of the grant of the patent: **21.11.2018**
(21) Application number: 11848419.5
(22) Date of filing: 31.08.2011
(51) Int. Cl.: H04L 12/721, H04L 12/717, H04L 12/801, H04L 12/851

(54) **COMMUNICATION SYSTEM, CONTROL APPARATUS, COMMUNICATION METHOD, AND PROGRAM**
KOMMUNIKATIONSSYSTEM, STEUERVORRICHTUNG, KOMMUNIKATIONSVERFAHREN UND PROGRAMM
SYSTÈME DE COMMUNICATION, APPAREIL DE COMMANDE, PROCÉDÉ DE COMMUNICATION ET PROGRAMME

(30) Priority: 16.12.2010 JP 2010280601
(43) Date of publication of application: 23.10.2013
(73) Proprietor: NEC Corporation, Tokyo 108-8001 (JP)
(72) Inventor: AKIYOSHI, Ippei, Tokyo 108-8001 (JP)
(74) Representative: Reeve, Nicholas Edward
(86) International application number: PCT/JP2011/004848
(87) International publication number: WO 2012/081146

(56) References cited:
- WO-A1-2010/103909
- JP-A- 9 331 360
- JP-A- 2001 077 856
- Wonho Kim ET AL: "Automated and Scalable QoS Control for Network Convergence", , 6 April 2010 (2010-04-06), pages 1-6, XP055114165, Retrieved from the Internet: URL:https://www.usenix.org/legacy/event/in mwren10/tech/full_papers/Kim.pdf [retrieved on 2014-04-15]
- CASADO M ET AL: "Ethane: taking control of the enterprise", APPLICATIONS, TECHNOLOGIES, ARCHITECTURES, AND PROTOCOLS FOR COMPUTER COMMUNICATION: PROCEEDINGS OF THE 2007 CONFERENCE ON APPLICATIONS, TECHNOLOGIES, ARCHITECTURES, AND PROTOCOLS FOR COMPUTER COMMUNICATIONS, 27-31 AUG. 2007,, vol. 37, no. 4, 27 August 2007 (2007-08-27), pages 1-12, XP002531272, ISBN: 978-1-59593-713-1
- ROB SHERWOOD ET AL: "FlowVisor: A Network Virtualization Layer", INTERNET CITATION, 14 October 2009 (2009-10-14), pages 1-15, XP002639208, Retrieved from the Internet: URL:http://www.openflow.org/downloads/tech nicalreports/openflow-tr-2009-1-flowvisor. pdf> [retrieved on 2011-05-27]
- NICK MCKEOWN ET AL: "OpenFlow: Enabling Innovation in Campus Networks", ACM SIGCOMM COMPUTER COMMUNICATION REVIEW, vol. 38, no. 2, 1 April 2008 (2008-04-01), pages 69-74, XP055091294, ISSN: 0146-4833, DOI: 10.1145/1355734.1355746
- 'OpenFlow Switch Specification' OPENFLOW SWITCH, [Online] 31 December 2009, pages 3 - 7, XP008166937 Retrieved from the Internet: <URL:http://www.openflowswitch.org/document s/open flow-spec-vl.0.0.pdf>

## Description

### TECHNICAL FIELD

The present invention relates to a communication system, a communication apparatus, a control apparatus, a packet flow forwarding path control method, and a program. In particular, it relates to a communication system, a control apparatus, a communication method, and a program for realizing communication by using a forwarding node processing a received packet in accordance with a process rule matching the received packet.

### BACKGROUND OF THE INVENTION

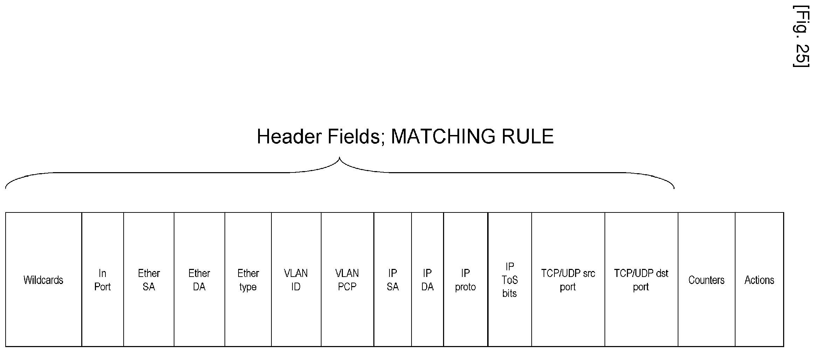

In recent years, a technique referred to as OpenFlow is proposed (see International Publication No. WO2008/095010 and Nick McKeown and seven others, "OpenFlow: Enabling Innovation in Campus Networks", [online], searched on December 1, 2010, Internet URL:http://www.openflowswitch.org//documents/openflow-wp-latest.pdf and "OpenFlow Switch Specification" Version 1.0.0. (Wire Protocol 0x01), searched on December 1, 2010, Internet <URL:http://www.openflowswitch.org/documents/openflow-spec-v1.0.0.pdf>). In OpenFlow, communication is deemed as an end-to-end flow, and routing control, failure recovery, load distribution, and optimization are executed for each flow. An OpenFlow switch specified in "OpenFlow Switch Specification" includes a secure channel for communication with an OpenFlow controller serving as a control apparatus. The OpenFlow switch operates in accordance with a flow table appropriately added or rewritten by the OpenFlow controller. In the flow table, a group of: a matching rule (header fields) matched against packet headers; flow statistics information (counters); and actions defining process contents is defined for each flow (see Fig. 25).

For example, upon receiving a packet, the OpenFlow switch searches the flow table for an entry having a matching rule (see header fields in Fig. 25) that matches header information of the received packet. As a result of the search, if an entry matching the received packet is found, the OpenFlow switch updates the flow statistics information (counters) and executes process contents described in the action field of the entry on the received packet (packet transmission from a specified port, flooding, discard, or the like). If, as a result of the search, no entry matching the received packet is found, the OpenFlow switch forwards the received packet to the OpenFlow controller via the secure channel to request the OpenFlow controller to determine a packet route (termed as "path", hereinafter) based on the source and destination of the received packet. Upon receiving a flow entry realizing the path, the OpenFlow switch updates the flow table. In this way, the OpenFlow switch uses an entry stored in the flow table as a process rule to forward a packet.

Based on the above basic configuration of OpenFlow, a packet path is determined, and a flow table is updated with a received flow entry achieving the packet path. However, a detailed forwarding control policy cannot be applied to each link included in the determined path, counted as a problem.

We have appreciated that it would be desirable to provide a communication system, a control apparatus, a communication method, and a program realizing packet forwarding in view of a forwarding control policy in each link, in addition to flow-based control.

"Automated and Scalable QoS Control for Network Convergence" by Wonho Kim et al of 6/4/2010 relates to a network QoS control framework for converged fabrics that program network devices with QoS parameters derived from a high level set of application requirements. "Ethane: taking control of the enterprise" by Casado M et al of 27/8/2007 describes an enterprise network architecture that couples flow based Ethernet switches with a centralised controller. "FlowVisor: A Network Visualization Layer" by Rob Sherwood et al of 14/10/2009 relates to switch-level virtualisation in which the same hardware forwarding plane can be shared among multiple logical networks, each with distinct forwarding logic.

### SUMMARY OF THE INVENTION

According to a first aspect of the present invention, there is provided a communication system comprising: at least one forwarding node processing a received packet in accordance with a process rule in which a matching rule for identifying a flow and a process content applied to a packet coinciding with the matching rule are associated to each other; and a control apparatus comprising: a path calculation unit for calculating a packet forwarding path for each flow between a source and destination address; a forwarding control policy management unit for managing a packet forwarding control policy applied to the at least one forwarding node; and a storage unit for storing information about the at least one forwarding node, the information including at least forwarding control policy information associated with the at least one forwarding node, the forward control policy information containing flow identifiers, the flow identifiers assigned to flows dependent on the source or the destination address; wherein the control apparatus is configured to set process rules that set a priority of packets to be transmitted using the flow identifiers in the at least one forwarding node reflecting the contents of the forwarding control policy information for the forwarding nodes in the packet forwarding path calculated by the path calculation unit and wherein the flow identifiers represent a degree of priority, based on the source or destination address, that is common between different mobile backhauls.

According to a second aspect of the present invention, there is provided a control apparatus, connected to at least one forwarding node processing a received packet in accordance with a process rule in which a matching rule for identifying a flow and a process content applied to a packet coinciding with the matching rule are associated to each other; wherein the control apparatus comprises: a path calculation unit for calculating a packet forwarding path for each flow between a source and destination address; a forwarding control policy management unit for managing a packet forwarding control policy applied to the forwarding node; and a storage unit for storing information about the at least one forwarding node, the information including at least forwarding control policy information associated with the at least one forwarding node, the forward control policy information containing flow identifiers, the flow identifiers assigned to flows dependent on the source or the destination address; wherein the control apparatus is configured to set process rules that set a priority of packets to be transmitted using the flow identifiers in the at least one forwarding node reflecting the contents of the forwarding control policy information for the forwarding nodes in the packet forwarding path calculated by the path calculation unit; and wherein the flow identifiers represent a degree of priority, based on the source or destination address, that is common between different mobile backhauls.

According to a third aspect of the present invention, there is provided a communication method comprising the steps of: using a control apparatus, which is connected to at least one forwarding node processing a received packet in accordance with a process rule in which a matching rule for identifying a flow and a process content applied to a packet coinciding with the matching rule are associated to each other and which comprises a forwarding control policy management unit managing a packet forwarding control policy applied to the forwarding node; causing the control apparatus to calculate a packet forwarding path for each flow between a source and destination address; storing, with a storage unit of the control apparatus, information about the at least one forwarding node including at least forwarding control policy information associated with the at least one forwarding node, the forward control policy information containing flow identifiers, the flow identifiers assigned to flows dependent on the source or the destination address; setting a process rule, with the control apparatus, that sets a priority of packets to be transmitted using the flow identifiers in the at least one forwarding node reflecting the contents of the forwarding control policy information for the forwarding nodes in the packet forwarding path calculated by the path calculation unit, wherein the flow identifiers represent a degree of priority, based on the source or destination address, that is common between different mobile backhauls. The present method is connected to a certain machine referred to as a control apparatus controlling forwarding nodes.

According to a fourth aspect of the present invention, there is provided a program, causing a computer forming a control apparatus, which is connected to at least one forwarding node processing a received packet in accordance with a process rule in which a matching rule for identifying a flow and a process content applied to a packet coinciding with the matching rule are associated to each other and which comprises a forwarding control policy management unit managing a packet forwarding control policy applied to the forwarding node, to execute the processes of the third aspect of the present invention. This program can be recorded in a computer-readable recording medium which may be non-transient. Namely, the present invention can be embodied as a computer program product.

According to the present invention, in addition to flow-based control, packet forwarding can be realized in view of a forwarding control policy in each link.

### BRIEF DESCRIPTION OF DRAWINGS

Fig. 1 illustrates an outline of the present invention.
Fig. 2 illustrates a configuration of a communication system according to a first exemplary embodiment of the present invention.
Fig. 3 is a block diagram illustrating a configuration of a control apparatus according to the first exemplary embodiment of the present invention.
Fig. 4 is a table illustrating information held in a forwarding node management unit in the control apparatus according to the first exemplary embodiment of the present invention.
Fig. 5 is a table illustrating information held in a QoS control flow storage unit in the control apparatus according to the first exemplary embodiment of the present invention.
Fig. 6 is a table illustrating information held in a QoS control policy storage unit in the control apparatus according to the first exemplary embodiment of the present invention.
Fig. 7 is a sequence diagram illustrating an operation according to the first exemplary embodiment of the present invention.
Fig. 8 is a flow chart illustrating a process executed by the control apparatus in Fig. 7.
Fig. 9 is another diagram illustrating an operation according to the first exemplary embodiment of the present invention.
Fig. 10 is an operation subsequent to Fig. 9.
Fig. 11 illustrates a configuration of a communication system to which the control apparatus according to the first exemplary embodiment of the present invention is applicable.
Fig. 12 is another flow chart illustrating a process executed by the control apparatus in Fig. 7.
Fig. 13 illustrates a configuration of a communication system according to a second exemplary embodiment of the present invention.
Fig. 14 is a table illustrating information held in a topology management unit in a control apparatus according to the second exemplary embodiment of the present invention.
Fig. 15 illustrates a configuration of a communication system according to a third exemplary embodiment of the present invention.
Fig. 16 illustrates another configuration of the communication system according to the third exemplary embodiment of the present invention.
Fig. 17 is a block diagram illustrating a configuration of a control apparatus according to the third exemplary embodiment of the present invention.
Fig. 18 is a table illustrating information held in a virtual network information storage unit in the control apparatus according to the third exemplary embodiment of the present invention.
Fig. 19 is another table illustrating information held in the virtual network information storage unit in the control apparatus according to the third exemplary embodiment of the present invention.
Fig. 20 is a table illustrating information held in a QoS control flow storage unit in the control apparatus according to the third exemplary embodiment of the present invention.
Fig. 21 is a flow chart illustrating a process executed by the control apparatus according to the third exemplary embodiment of the present invention.
Fig. 22 is another flow chart illustrating a process executed by the control apparatus according to the third exemplary embodiment of the present invention.
Fig. 23 illustrates a configuration of a communication system according to a fourth exemplary embodiment of the present invention.
Fig. 24 is a table illustrating information held in a topology management unit in a control apparatus according to the fourth exemplary embodiment of the present invention.
Fig. 25 illustrates a configuration of a flow entry described in "OpenFlow Switch Specification".

### Description of Embodiments

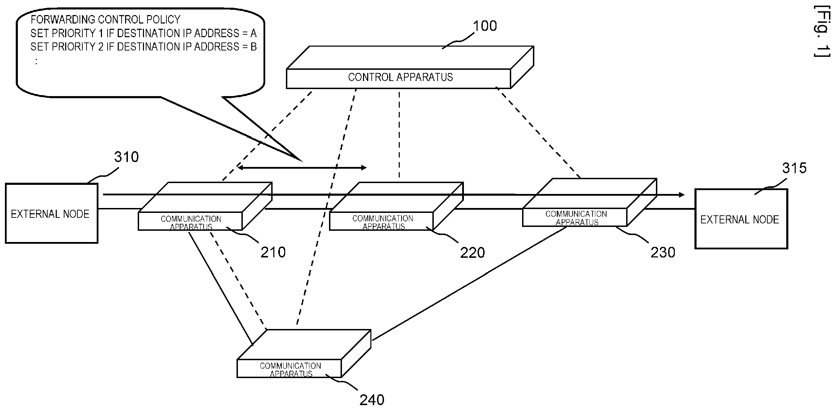

First, an outline of the present invention will be described. As illustrated in Fig. 1, the present invention can be realized by a communication system comprising: a plurality of forwarding nodes 210 to 240 each processing a received packet in accordance with a process rule in which a matching rule for identifying a flow and a process content applied to a packet coinciding with the matching rule are associated with each other; and a control apparatus 100 setting a process rule in each of the forwarding nodes. The reference characters in this outline are appended to the individual elements for convenience and only as examples to facilitate understanding. Thus, the reference characters are not intended to limit the present invention to the illustrated modes. Further for simplified illustration, the singular form of any element is used, which, however should not be limited to only the singular mode, but may represent the plurality if necessary.

In addition, while not illustrated, network(s) is (are) present intervening between the forwarding nodes 210 and 220 and between the forwarding nodes 220 and 230 to connect the forwarding nodes. When executing QoS (Quality of Service) control on a packet, the individual networks process the packet based on different packet header field information. Herein, the network present between the forwarding nodes 210 and 220 refers to field A, and the network present between the forwarding nodes 220 and 230 refers to field B, to execute QoS control on a packet.

Specifically, the control apparatus 100 comprises: a path calculation unit calculating a packet forwarding path per flow; and a forwarding control policy management unit managing packet forwarding control policies applied to paths among predetermined ones of the plurality of forwarding nodes (in the example in Fig. 1, the path between the forwarding nodes 210 and 220 and the path between the forwarding nodes 220 and 230). The control apparatus 100 sets process rules reflecting contents of forwarding control policies in the forwarding nodes on the calculated path (for example, in the forwarding nodes 210, 220, and 230 in Fig. 1).

In the example in Fig. 1, the control apparatus 100 sets a process rule reflecting a policy of causing the forwarding node 210 to set priority 1 (high priority) in a predetermined packet header field A and to forward the packet to the forwarding node 220 if the forwarding node 210 receives a packet whose destination IP address is a predetermined destination address A and causing the forwarding node 210 to set priority 2 (lower than priority 1) in the predetermined packet header field A and to forward the packet to the forwarding node 220 if the destination IP address is a predetermined destination address B. In addition, for the path between the forwarding nodes 220 and 230, the control apparatus 100 sets a process rule reflecting a policy of causing the forwarding node 220 to set a priority X (high priority) in the packet header field B and to forward the packet to the forwarding node 230 if the forwarding node 220 receives a packet whose destination IP address is the predetermined destination A and causing the forwarding node 220 to set a priority Y (lower than the priority X) in the packet header field B and to forward the packet to the forwarding node 230 if the destination IP address is the predetermined destination address B.

In this way, in addition to flow-based control, detailed packet forwarding in view of a forwarding control policy in each link can be realized. As a result, detailed control can be executed. For example, packet reachability in a certain link of a single flow can be improved.

### (First Exemplary Embodiment)

Next, a first exemplary embodiment of the present invention will be described in detail with reference to the drawings. In the first exemplary embodiment, an OpenFlow-based mobile backhaul is configured by using OpenFlow described as background art of the present invention, and the OpenFlow-based mobile backhaul is operated in conjunction with existing mobile backhauls.

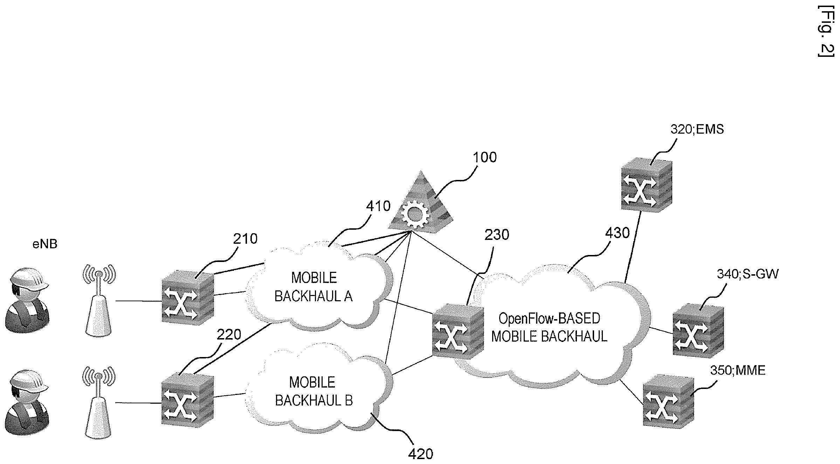

Fig. 2 illustrates a configuration of the first exemplary embodiment of the present invention. Fig. 2 illustrates a configuration including a mobile backhaul A410, a mobile backhaul B420, an OpenFlow-based mobile backhaul 430, forwarding nodes 210 to 230 each arranged at an edge of a mobile backhaul, and a control apparatus 100 setting process rules in the forwarding nodes 210 to 230 to control paths between a base station (E-UTRAN NodeB (eNB)) and any one of the core apparatuses.

At least a QoS control policy is different between the mobile backhauls A410 and B420. In the present exemplary embodiment, the mobile backhauls A410 and B420 execute VLAN (Virtual Local Area Network)-based and DSCP (Differentiated Services Code Point)-based QoS control, respectively.

The OpenFlow-based mobile backhaul 430 is configured by a group of forwarding nodes equivalent to the forwarding nodes 210 to 230.

While an Element Management System (EMS) 320, a Serving Gateway (S-GW) 340, and a Mobility Management Entity (MME) 350 are illustrated in Fig. 2 as core apparatuses, the core apparatuses of the present invention are not limited to these illustrated examples.

While OpenFlow switches disclosed in the above International Publication No. WO2008/095010 and "OpenFlow: Enabling Innovation in Campus Networks" and "OpenFlow Switch Specification" can be used as the forwarding nodes 210 to 230, arbitrary switches having equivalent functions may of course be used as the forwarding nodes 210 to 230. The forwarding nodes 210 to 230 of the present invention are not limited to such OpenFlow switches.

The control apparatus 100 manages and controls paths between the forwarding nodes 210 and 230 and between the forwarding nodes 220 and 230 as virtual links, in addition to paths in the above OpenFlow-based mobile backhaul 430. In this way, for example, for flows detected by the forwarding nodes 210 and 220, the control apparatus 100 can execute path control (i.e., routing control) in the OpenFlow-based mobile backhaul 430. Similarly, the control apparatus 100 can allow packets transmitted from any one of the various core apparatuses to reach a base station (eNB) via relevant mobile backhaul(s).

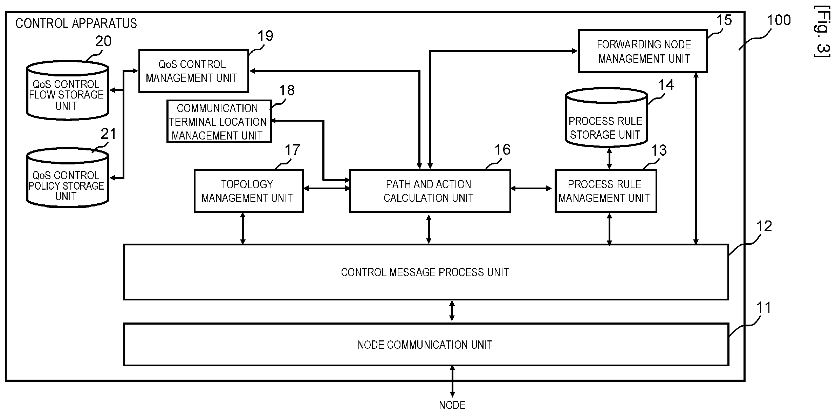

Next, a detailed configuration of the control apparatus 100 will be described. Fig. 3 is a block diagram illustrating a configuration of the control apparatus according to the first exemplary embodiment of the present invention. In Fig. 3, the control apparatus 100 includes: a node communication unit 11 communicating with the forwarding nodes 210 to 230 and forwarding nodes arranged in the OpenFlow-based mobile backhaul 430 (hereinafter, these forwarding nodes will be simply referred to as "forwarding nodes" unless clear distinction is required); a control message process unit 12; a process rule management unit 13; a process rule storage unit 14; a forwarding node management unit 15; a path and action calculation unit 16; a topology management unit 17; a communication terminal location management unit 18; a QoS control management unit 19; a QoS control flow storage unit 20; and a QoS control policy storage unit 21. Hereinafter, operations of these units will be described.

The control message process unit 12 analyses a control message received from a forwarding node and transmits control message information to a corresponding process means (or units) in the control apparatus 100.

The process rule management unit 13 manages process rules set in the forwarding nodes. Specifically, the process rule management unit 13 registers calculation results obtained by the path and action calculation unit 16 in the process rule storage unit 14 as process rules and sets the process rules in forwarding nodes. In addition, if a process rule set in a forwarding node is changed, the process rule management unit 13 receives a notification such as a process rule deletion notification from the forwarding node and updates information registered in the process rule storage unit 14.

The forwarding node management unit 15 manages capabilities of the forwarding nodes controlled by the control apparatus 100 (for example, the number of ports, types of ports, and types of actions supported). In addition, the forwarding node management unit 15 manages setting states of the QoS control policies associated with ports of the forwarding nodes.

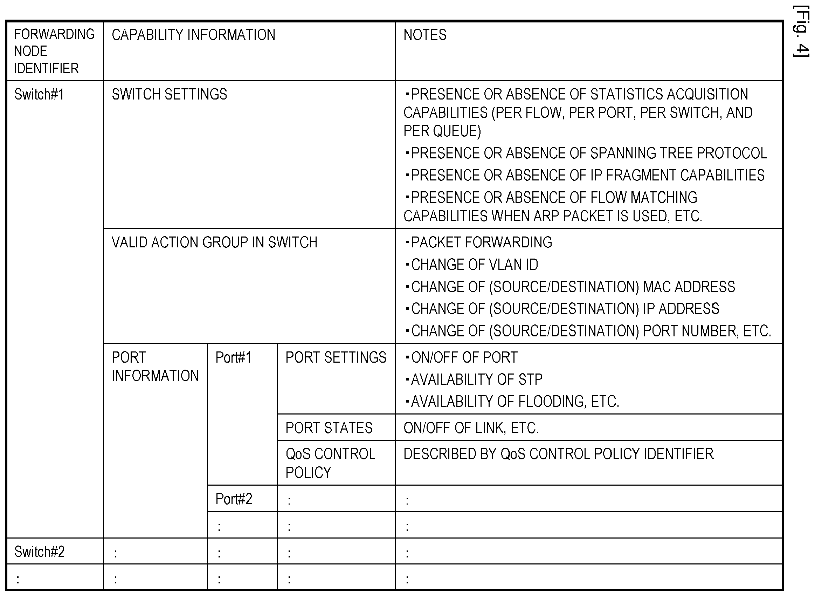

Fig. 4 illustrates examples of information held in the forwarding node management unit 15 in the control apparatus according to the present exemplary embodiment. In Fig. 4, information about forwarding nodes each supplied with a unique forwarding node identifier is managed. The forwarding node management unit 15 includes: information about switch settings such as presence or absence of statistics acquisition capabilities; presence or absence of a spanning tree protocol; and presence or absence of flow matching capabilities when ARP (Address Resolution Protocol) is used. In addition, the forwarding node management unit 15 includes information about types of valid actions, such as packet forwarding and change of various headers. In addition, the forwarding node management unit 15 includes port information. For each port, as an item of the port information, a QoS control policy is managed by a QoS control policy identifier which will be described in detail later.

The path and action calculation unit 16 in Fig. 3 calculates a packet forwarding path, based on communication terminal location information managed by the communication terminal location management unit 18 and network topology information established by the topology management unit 17. Next, the path and action calculation unit 16 acquires a QoS control policy identifier set in a port of a forwarding node on the forwarding path from the forwarding node management unit 15. In addition, the path and action calculation unit 16 acquires a QoS control policy (a flow on which QoS control is executed and specific contents thereof) corresponding to the acquired QoS control policy identifier from the QoS control management unit 19. In view of the contents of the QoS control policy, the path and action calculation unit 16 determines actions to be executed by the forwarding node on the forwarding path.

The topology management unit 17 establishes network topology information, based on a connection relationship among the forwarding nodes (including the forwarding nodes 210 to 230). The relationship is collected via the node communication unit 11.

The communication terminal location management unit 18 manages information for indentifying locations of the communication terminals connected to the communication system. In the present exemplary embodiment, an IP address is used as information for identifying each of the communication terminals. The forwarding node identifier of each of the forwarding nodes, to which the communication terminals are connected, and port information about the forwarding nodes are used as information for identifying the location of each of the communication terminals. Of course, instead of the above information, other information may be used to identify the terminals and the locations thereof.

Upon receiving a request from the path and action calculation unit 16, the QoS control management unit 19 refers to the QoS control flow storage unit 20 and the QoS control policy storage unit 21, so as to supply a QoS control policy (a flow on which QoS control is executed or specific contents thereof) corresponding to a QoS control policy identifier.

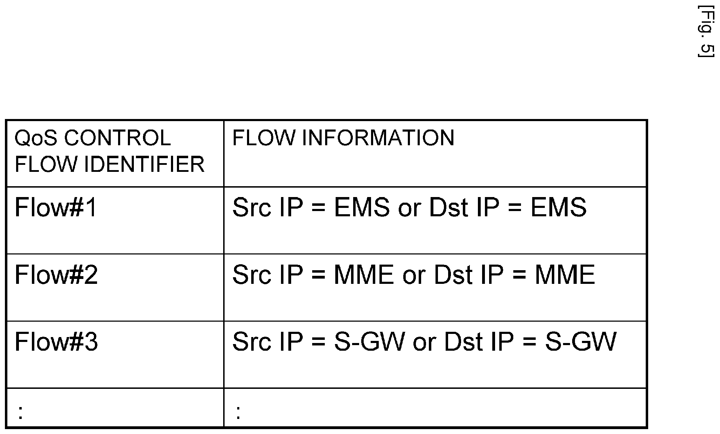

Fig. 5 is a table illustrating information held in the QoS control flow storage unit 20. In Fig. 5, Flow#1, which is a QoS control flow identifier representing the highest priority, is given to a flow in which the source (Src) or destination (Dst) IP address is the EMS 320. Similarly, a QoS control flow identifier Flow#2 is given to a flow in which the source or destination IP address is the MME 350, and a QoS control flow identifier Flow#3 is given to a flow in which the source or destination IP address is the S-GW 340. In this way, a common QoS control flow identifier is set based on a connection end, instead of on the mobile backhaul. Thus, simply by changing the QoS control policy identifier, policy control based on a corresponding mobile backhaul can be executed.

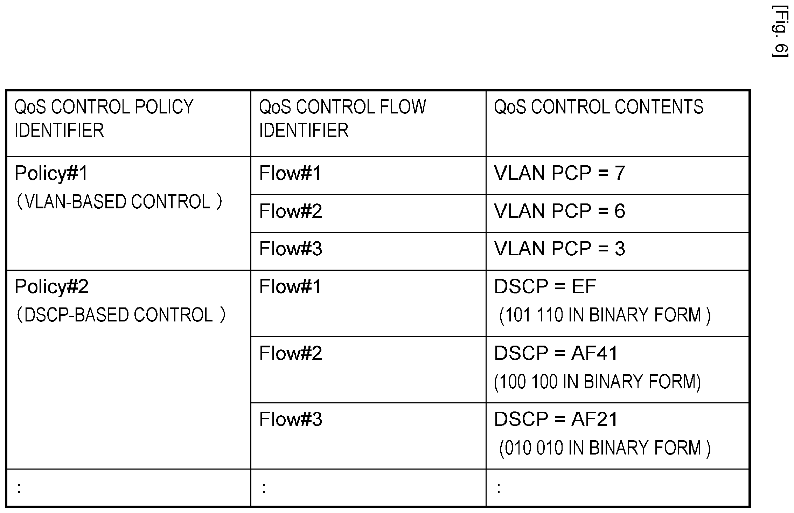

Fig. 6 is a table illustrating information held in the QoS control policy storage unit 21. In Fig. 6, QoS control flow identifiers and specific control contents thereof are set for each QoS control policy. Thus, based on a QoS control policy set in a certain port of a certain forwarding node and based on a QoS control flow identifier thereof, the path and action calculation unit 16 can determine whether a link for which a process rule is to be set is a control target link connected to a mobile backhaul or the like. If the link is a QoS control-required link, a QoS control-required flow can be identified and a process rule can be reflected. For example, in the case of setting a process rule for a link having Policy#1 and Flow#1 in Fig. 6, an action of setting VLAN PCP (Priority Code Point) to 7 is added to a normal packet forwarding action. Similarly, in the case of setting a process rule for a link having Policy#2 and Flow#1 in Fig. 6, an action of setting the DSCP (DiffServ Code Point) to EF (treated as a virtual dedicated (leased) line) is added to a normal packet forwarding action.

The control apparatus 100 as described above can be realized by adding the above QoS control management unit 19, the QoS control flow storage unit 20, and the QoS control policy storage unit 21 to the OpenFlow controller described in OpenFlow: Enabling Innovation in Campus Networks" and "OpenFlow Switch Specification" and by adding the QoS-control-policy-related item to the port information managed by the forwarding node management unit 15.
In addition, the individual units (process means) of the control apparatus 100 in Fig. 3 can be realized (implemented) by computer programs causing a computer forming the control apparatus 100 to use hardware thereof and execute the respective processes as described above.

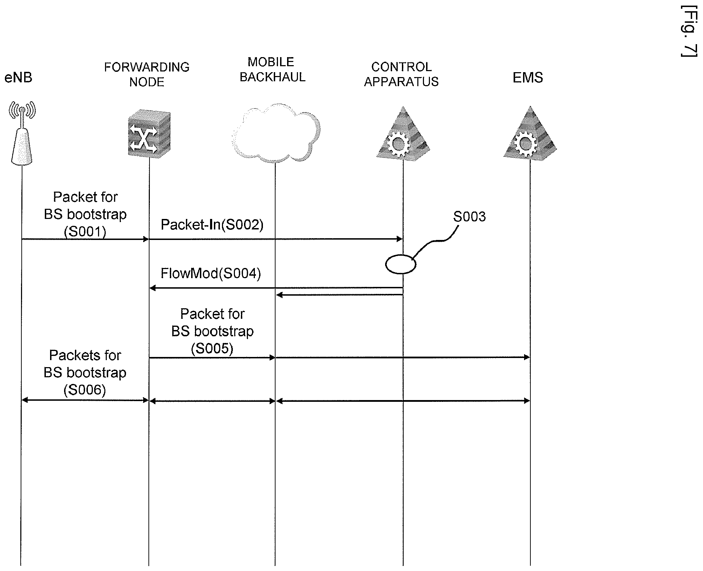

Next, an operation according to the present exemplary embodiment will be described in detail with reference to the drawings. Fig. 7 is a sequence diagram of an operation when a new base station (eNB) is deployed in the communication system of Fig. 2 in which a plurality of mobile backhauls exist. The following description will be made, assuming that a new base station (eNB) is set to the forwarding node 210 connected to an edge of the mobile backhaul A 410.

First, to deploy the base station (eNB), the base station (eNB) transmits a bootstrap packet whose destination is the Element Management System EMS 320 (S001). Since the bootstrap packet does not match the matching rule of any existing process rule, the forwarding node 210 transmits a new flow generation notification to the control apparatus 100 (S002; Packet-In).

Upon receiving the new flow generation notification, the control apparatus 100 calculates a path between the base station (eNB) and the EMS 320 and sets process rules in the forwarding nodes on the path (in this example, the forwarding nodes include the forwarding nodes 220 and 230 and forwarding nodes in the OpenFlow-based mobile backhaul 430) (S003; FlowMod). In this step, as will be described later, in accordance with a QoS control policy between the forwarding nodes 210 and 230, the control apparatus 100 also sets a process rule of changing VLAN PCP of the packet, whose source is the base station (eNB) and destination is the EMS 320, to 7 and causing the forwarding node 210 to forward the packet to the forwarding node 230.

In this way, the priority of packets transmitted from the base station (eNB) to the EMS 320 through the mobile backhaul A410 is increased. Subsequently, the forwarding node 210 forwards the first received bootstrap packet and the subsequent packets to the EMS 320 in accordance with the set process rule (S005 and S006).

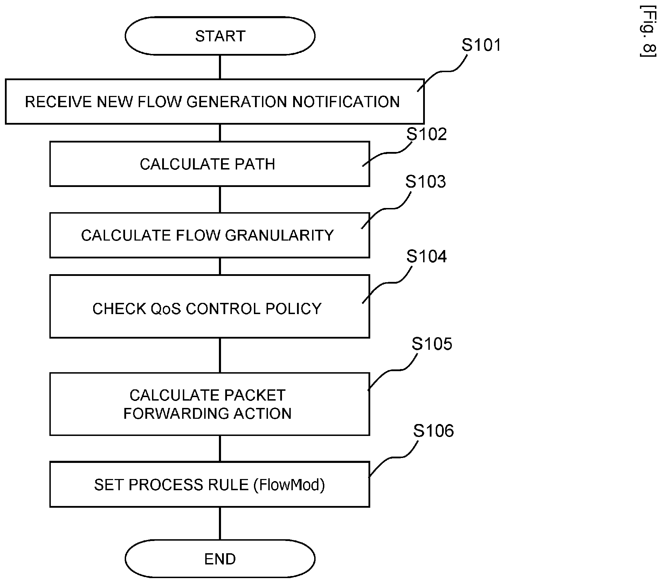

Fig. 8 is a flow chart illustrating a series of steps after the control apparatus 100 receives the new flow generation notification in S002 in Fig. 7.

As illustrated in Fig. 8, upon receiving the new flow generation notification (step S101), the control apparatus 100 calculates a path from the base station (eNB) to the EMS 320, based on base station (eNB) location information identified by a port of the forwarding node 210, the port having received the packet, and based on a network topology managed by the topology management unit 17 (step S102).

Next, the control apparatus 100 calculates a matching rule for identifying the received packet (step S103; calculation of flow granularity). In this step, to calculate the matching rule, the control apparatus 100 refers to the QoS control flow storage unit 20 (see Fig. 5). In addition, the control apparatus 100 checks whether or not the bootstrap packet that is transmitted from the base station (eNB) to the EMS 320 corresponds to a Qos control-required flow. In this case, since the destination IP address is the EMS 320, Flow#1 is acquired as the QoS control flow identifier.

Next, the control apparatus 100 refers to information (see Fig. 4) about the forwarding nodes on the path calculated in step S102 and checks whether or not the path includes a link in which a QoS control policy is set (step S104). The following description will be made, assuming that the control apparatus 100 has confirmed that Policy#1 is set as a QoS control policy identifier in a port of the forwarding node 210, the port being connected to the mobile backhaul A 410.

Next, the control apparatus 100 calculates actions to be set in the forwarding nodes on the path calculated in step S102 (step S105). Regarding the process rule to be set in the forwarding node 210, as described above, the control apparatus 100 has already confirmed that a QoS control policy having Policy#1 is set and the packet relating to the new flow generation notification corresponds to a QoS control-reqiored flow. Thus, in step S102, for the bootstrap packet that is transmitted from the base station (eNB) to the EMS 320, the control apparatus 100 calculates actions of changing VLAN PCP to 7 and causing the forwarding node 210 to forward the packet to the forwarding node 230.

Finally, by using the matching rule calculated in step S103 and the actions created in step S105, the control apparatus 100 creates process rules and sets the process rules in the respective forwarding nodes on the calculated path (step S106).

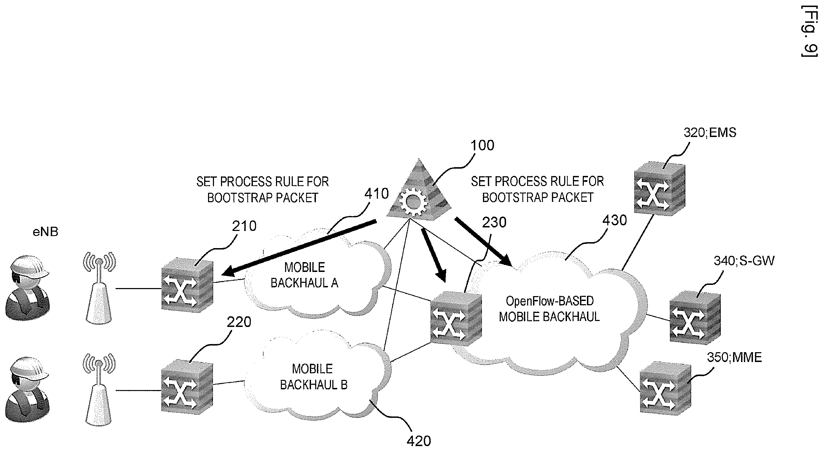

After the above steps, as illustrated in Fig. 9, a path for forwarding the bootstrap packet from the base station (eNB) to the EMS 320 is formed.

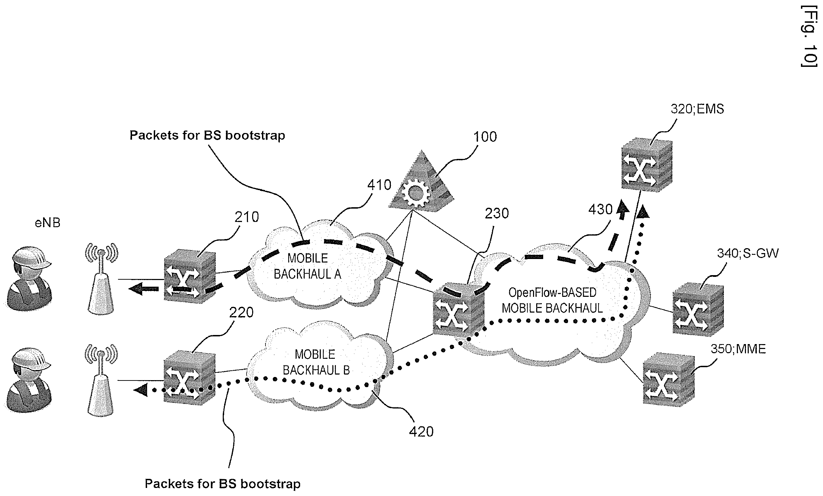

Subsequently, the bootstrap packet transmitted from the base station (eNB) is forwarded to the EMS 320 in accordance with the path indicated by a dashed line in Fig. 10. While the bootstrap packet passes through the mobile backhaul A410, the QoS control policy is reflected and reachability to the forwarding node 230 is ensured, since the forwarding node 210 located before the mobile backhaul A410 changes the VLAN PCP.

A similar process is also used if a base station (eNB) is newly set for the forwarding node 220. Simply by causing the base station (eNB) to transmit a bootstrap packet, the control apparatus 100 can complete path calculation (see a dotted line in Fig. 10) and necessary QoS control policy settings. Namely, in this case, since the forwarding node 220 changes the DSCP before the bootstrap packet passes through the mobile backhaul B420, reachability to the forwarding node 230 is ensured.

As described above, according to the present exemplary embodiment, detailed setting operations are eliminated. For example, even when a base station is newly deployed, there is no need to set QoS control policies based on connected mobile backhauls.

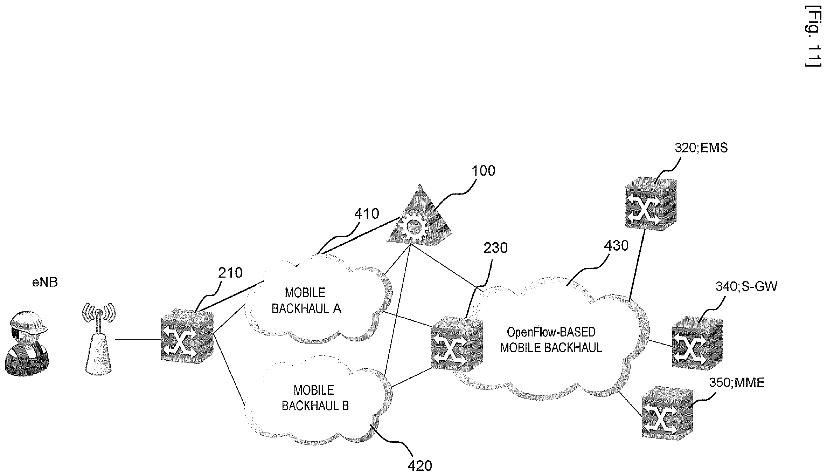

In addition, according to the above exemplary embodiment, whether the path includes a link in which a QoS control policy is set is managed per forwarding node port. Thus, as illustrated in Fig. 11, even if a single forwarding node is connected to two mobile backhauls, the exemplary embodiment is applicable without change. In the case of the configuration in Fig. 11, the control apparatus 100 first calculates a path, that is, whether the packet transmitted from a newly set base station (eNB) passes through the mobile backhaul A410 or B420. Next, the control apparatus 100 uses port information about the forwarding node on the path and selects a QoS control policy associated with the port connected to the selected one of the mobile backhauls A410 and B420, so as to reflect the QoS control policy in the process rule.

In the above exemplary embodiment, as illustrated in Fig. 8, the control apparatus 100 first calculates a path, then checks a QoS control target flow (calculation of flow granularity), and next checks a QoS control policy. However, this order can be appropriately changed.

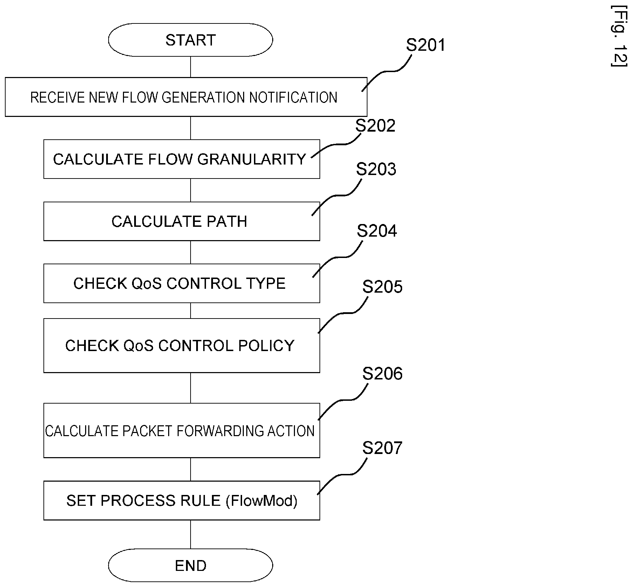

In Fig. 12, after receiving a new flow generation notification (step S201), the control apparatus 100 calculates a matching rule for identifying the received packet (step S202; calculation of flow granularity).

Next, the control apparatus 100 calculates a path (step S203) and refers to the QoS control flow storage unit 20 (see Fig. 5) to check whether the received packet corresponds to a control target flow (step S204).

Subsequent operations are the same as those in Fig. 8. Namely, the control apparatus 100 checks whether the path includes a link in which a QoS control policy is set (step S205), calculates actions reflecting QoS control policies in necessary links (step S206), and sets process rule(s) (step S207).

In addition, in the above exemplary embodiment, the control apparatus 100 manages the forwarding nodes 210 to 230 and the OpenFlow-based mobile backhaul 430 as a single virtual network. However, forwarding nodes may be arranged only at mobile backhaul edges, such as the forwarding nodes 210 and 220, and each of the forwarding nodes may be deemed and managed as an individual network.

In addition, in the above exemplary embodiment, every time a new flow is generated, actions are calculated in view of related control policies, and the actions are set in the forwarding nodes. However, the processes corresponding to the control policies may be registered in advance in the forwarding nodes. To achieve this, for example, a virtual port is created for each of the real ports of the forwarding nodes. If an action of forwarding a packet to any one of the virtual ports is set in a forwarding node, the packet forwarded to the virtual port is controlled in accordance with a control policy associated with a corresponding real port, and the packet is then forwarded via the corresponding real port. Alternatively, a forwarding node may have a plurality of tables managing process rules and select a process rule corresponding to a received packet from the tables managing one or more process rules. If the forwarding node executes an action group described in the selected one or more process rules as a series of actions, the forwarding node may use one of the tables managing the process rule(s) to execute actions corresponding to a control policy per port.

### (Second Exemplary Embodiment)

Next, a second exemplary embodiment of the present invention will be described in detail with reference to the drawings. The second exemplary embodiment is obtained by modifying the above first exemplary embodiment.

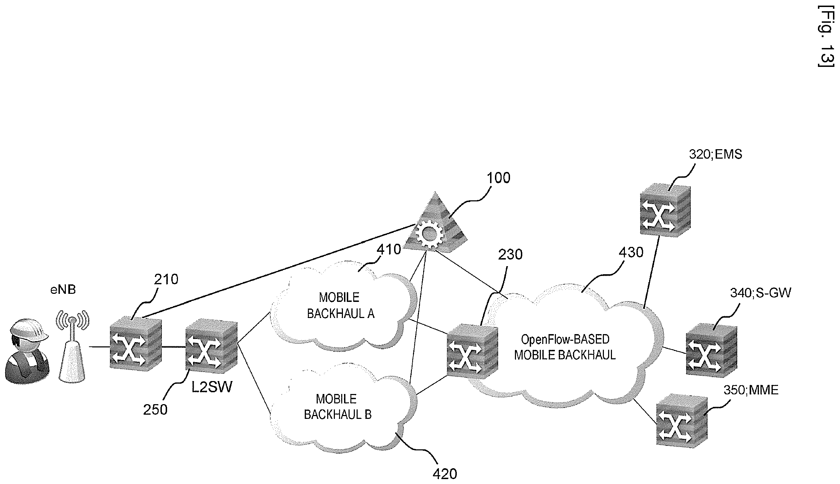

In the above first exemplary embodiment, description has been given in a mode wherein the forwarding node management unit 15 manages presence/absence of QoS control policy settings. However, for example, as illustrated in Fig. 13, if a layer 2 switch (L2SW) 250 is arranged between the forwarding node 210 connected to the base station (eNB) and the mobile backhauls A410 and B420, different QoS control policies may not be associated in port information of the forwarding node 210.

According to the second exemplary embodiment of the present invention, even with the configuration illustrated in Fig. 13, a QoS control policy based on a mobile backhaul can be reflected. Since the basic configuration of the second exemplary embodiment is similar to that of the first exemplary embodiment, the description will hereinafter be made with a focus on the differences.

According to the second exemplary embodiment of the present invention, presence/absence of QoS control policy settings is managed by the topology management unit 17 in Fig. 3, instead of by the forwarding node management unit 15.

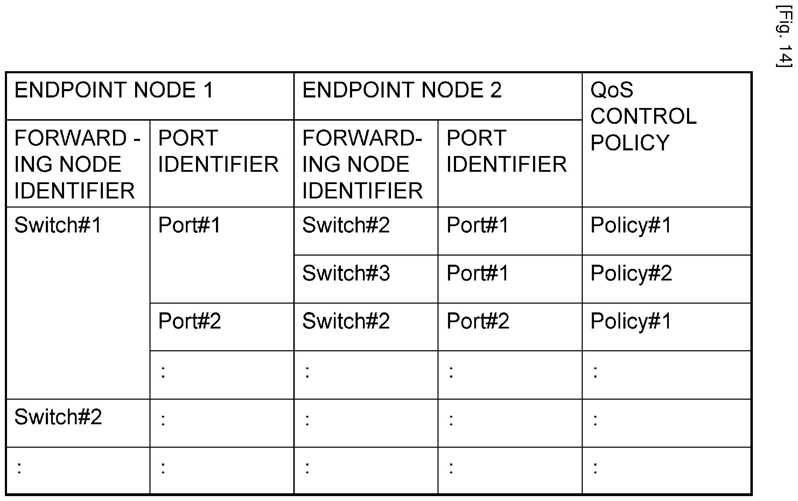

Fig. 14 illustrates network topology information managed by a topology management unit in a control apparatus 100 according to the second exemplary embodiment of the present invention. For example, virtual links can be formed by using: port#1 of a forwarding node having a forwarding node identifier Switch#1 (for example, the forwarding node 210 in Fig. 13); port#1 of an opposite forwarding node (Switch#2) on the mobile backhaul A410 side; and port#1 of a forwarding node (Switch#3) on the mobile backhaul B420 side. In this way, since a QoS control policy can be managed per virtual link, even with the configuration illustrated in Fig. 13, a QoS control policy based on a mobile backhaul present on a path calculated by the control apparatus 100 can be applied.

In addition, in the case of the configuration illustrated in Fig. 13, to ensure reachability of a packet transmitted from the forwarding node 210 to the forwarding node 230 via the mobile backhaul 410 or 420, it is desirable that the following process be executed. First, a virtual MAC address is allocated in advance to each of the ports of the forwarding node 230, each port connected to the mobile backhaul 410 or 420. In addition, the forwarding node 210 is configured to rewrite the MAC address of a packet forwarded to the layer 2 switch (L2SW) 250 to the virtual MAC address, depending on whether the packet passes through the mobile backhaul 410 or 420, before forwarding the packet. In this way, the layer 2 switch (L2SW) 250 can execute appropriate switching. For this process to be executed, it is only necessary to add contents of the above header rewrite process to control contents per policy illustrated in Fig. 6.

According to the present exemplary embodiment where a QoS control policy is managed for each virtual link illustrated in Fig. 14, a QoS control policy based on a mobile backhaul can also be applied to the network configurations in Figs. 2 and 11.

### (Third Exemplary Embodiment)

Next, a third exemplary embodiment of the present invention will be described in detail with reference to the drawings. The third exemplary embodiment is obtained by modifying the above first and second exemplary embodiments. Since the basic configuration of the present exemplary embodiment is also similar to that of the first exemplary embodiment, the description will hereinafter be made with a focus on the differences.

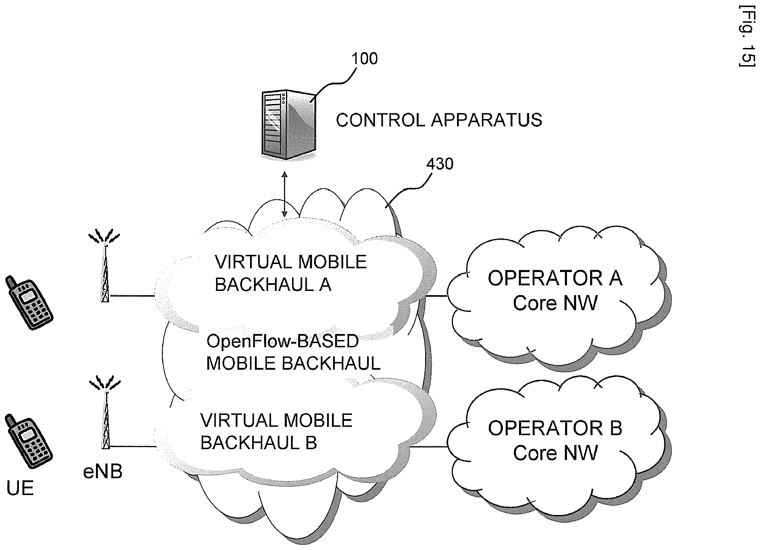

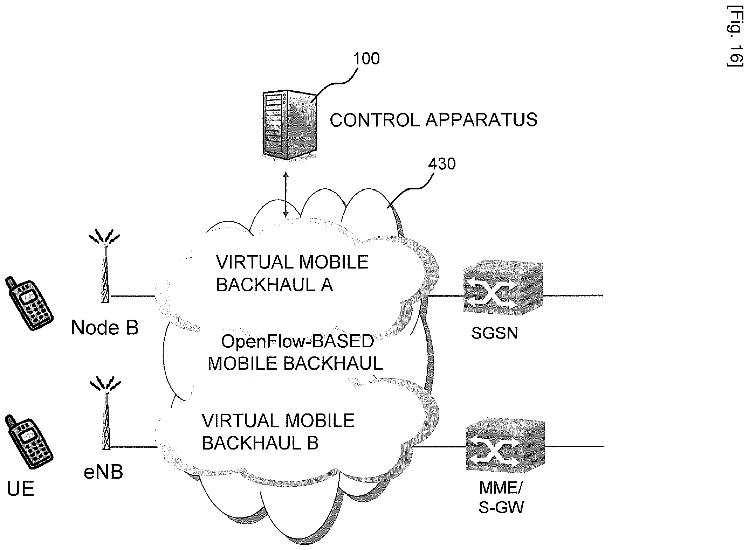

Figs. 15 and 16 illustrate configurations of a communication system according to the third exemplary embodiment of the present invention. Fig. 15 illustrates a configuration in which the OpenFlow-based mobile backhaul 430 is shared and used by a plurality of operators. Fig. 16 illustrates a configuration in which the OpenFlow-based mobile backhaul 430 is shared and used through different access methods (or systems).

Figs. 15 and 16 illustrate configurations in which the OpenFlow-based mobile backhaul 430 is shared but a different QoS control policy needs to be reflected depending on the operator or the access method.

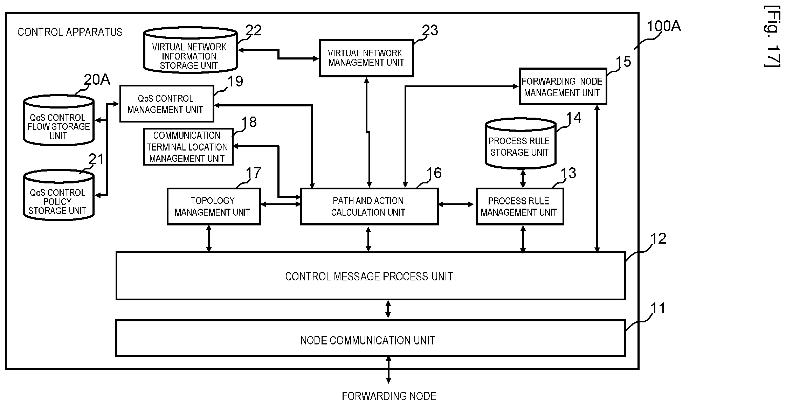

Fig. 17 is a block diagram illustrating a configuration of a control apparatus 100A according to the third exemplary embodiment of the present invention. This control apparatus differs from the control apparatus 100 according to the first exemplary embodiment in Fig. 3 in that the control apparatus further includes a virtual network management unit 23 managing information about virtual networks and a virtual network information storage unit 22 storing information about virtual networks. In addition, since the QoS control flow differs depending on a virtual network, information held in a QoS control flow storage unit 20A also differs. Hereinafter, each of these differences will be described.

In the present exemplary embodiment, the virtual network management unit 23 manages virtual networks, by allocating virtual network(s) to a group of forwarding node input ports or to a group of terminals accessing the OpenFlow-based mobile backhaul 430. However, the virtual network management method is not particularly limited.

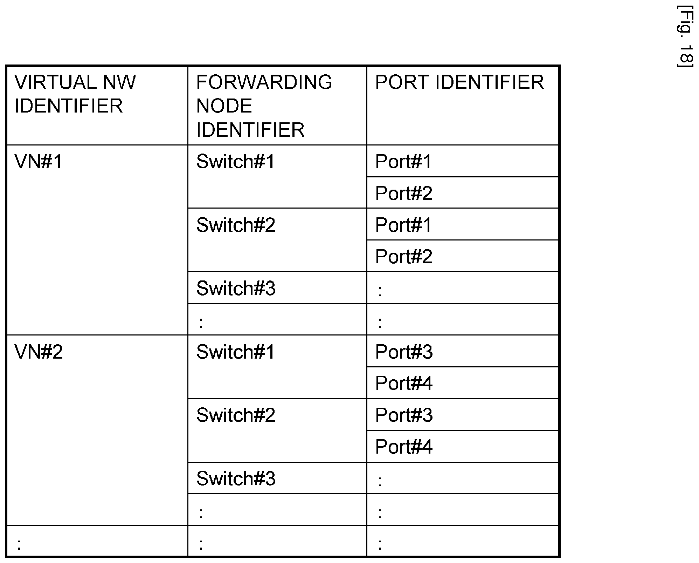

Fig. 18 is a table illustrating information held in the virtual network information storage unit 22 when virtual networks (VN) are allocated to a group of input ports of forwarding nodes arranged in the OpenFlow-based mobile backhaul 430. In Fig. 18, ports #1 and #2 of a forwarding node identified by forwarding node identifier Switch#1 are allocated to virtual network #1. Also, ports #3 and #4 of this forwarding node are allocated to virtual network #2.

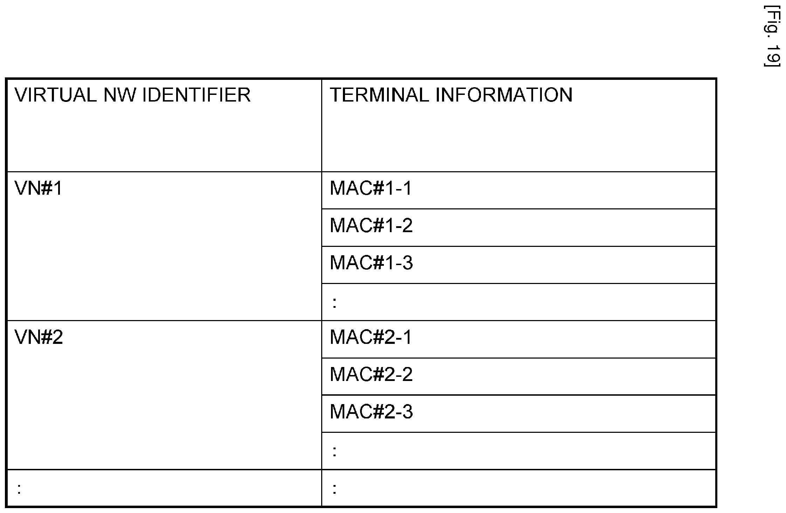

Fig. 19 is a table illustrating information held in the virtual network information storage unit 22 when virtual networks are allocated to a group of terminals accessing the OpenFlow-based mobile backhaul 430. In Fig. 19, a terminal whose terminal information (MAC address, for example) is MAC#1-1 can be identified as a user using virtual network #1. Similarly, a terminal whose terminal information is MAC#2-1 can be identified as a user using virtual network #2.

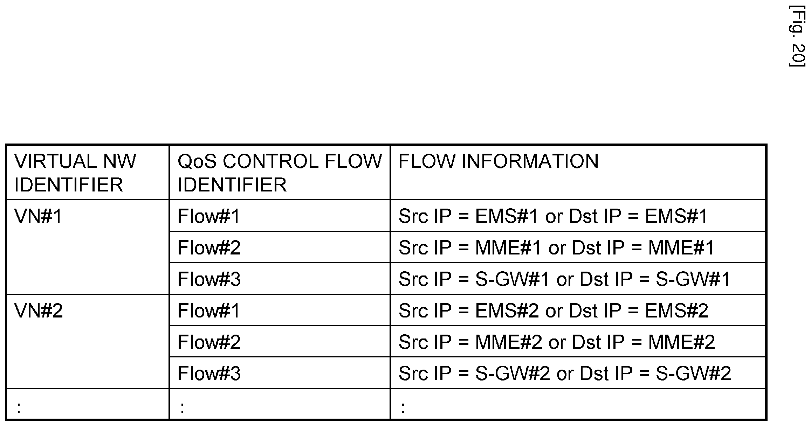

Fig. 20 is a table illustrating information held in the QoS control flow storage unit 20A according to the present exemplary embodiment. In Fig. 20, in both of virtual networks VN#1 and VN#2, QoS control flow identifier Flow#1 representing the highest priority is given to flows in which a source or destination IP address is EMS#1 or EMS#2.

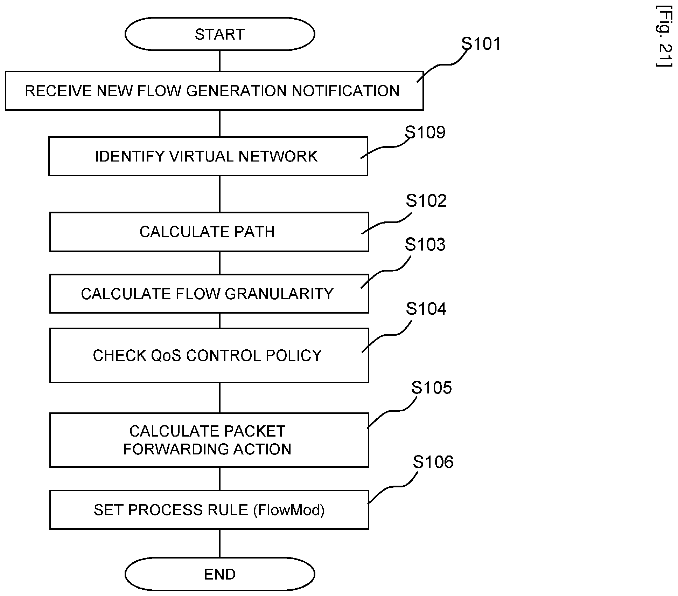

Next, an operation of the present exemplary embodiment will be described. Fig. 21 is a flow chart illustrating a series of steps executed after the control apparatus 100A receives a new flow generation notification from a forwarding node in the OpenFlow-based mobile backhaul 430.

As illustrated in Fig. 21, the basic operation is similar to that of the control apparatus 100 according to the first exemplary embodiment in Fig. 8. Upon receiving a new flow generation notification (step S101), the control apparatus 100A refers to information held in the virtual network information storage unit 22 and identifies a virtual network to which the generated flow belongs (step S109).

Subsequently, the same steps as those in Fig. 8 are executed. Namely, the control apparatus 100A calculates a path (step S102) and calculates a matching rule for identifying the received packet (step S103; calculation of flow granularity). The control apparatus 100A also refers to the QoS control flow storage unit 20A (see Fig. 20) and checks whether the packet corresponds to a control target flow, based on the virtual network identified in step S109 and the flow information.

Next, the control apparatus 100A refers to information (see Fig. 4) about the forwarding nodes on the path calculated in step S102, to check whether or not the path includes a link in which a QoS control policy is set (step S104).

Next, the control apparatus 100A calculates actions that need to be set in the forwarding nodes on the path calculated in step S102 (step S105). In this step, regarding the process rule set in the forwarding node 210, if the path includes a link in which a QoS control policy is set and the packet corresponds to a QoS control target flow, the control apparatus 100A adds actions based on the QoS control policy.

Finally, by using the matching rule calculated in step S103 and the actions created in step S105, the control apparatus 100A creates a process rule and sets the process rule in each forwarding node on the calculated path (step S106).

As described above, the present exemplary embodiment can flexibly respond to a virtual mobile backhaul shared mode that could be reached after a packet is forwarded to the OpenFlow-based mobile backhaul 430 from a state in which different mobile backhauls exist as illustrated in Figs. 2 and 11, for example.

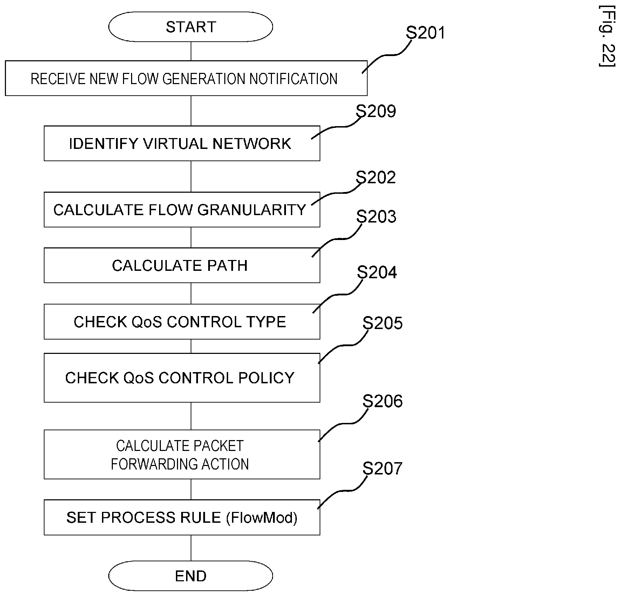

In the present exemplary embodiment, as described with Fig. 12 in the first exemplary embodiment, only the flow granularity may be calculated first and the path may be calculated next. Fig. 22 is a flow chart obtained by adding the above virtual network identification step (step S209) after the step of receiving a new flow generation notification in the flow chart in Fig. 12. In this case too, a process rule reflecting a QoS control policy can be set in a similar way to the above way.

### (Fourth Exemplary Embodiment)

Next, a fourth exemplary embodiment of the present invention will be described in detail with reference to the drawings. The above first to third exemplary embodiments have been described based on an example where a QoS control policy is applied to a certain link. However, besides the QoS control, the present invention can also be used for other routing control and the like. Since the present exemplary embodiment can also be realized by a configuration similar to that of the second exemplary embodiment, the description will hereinafter be made with a focus on the differences.

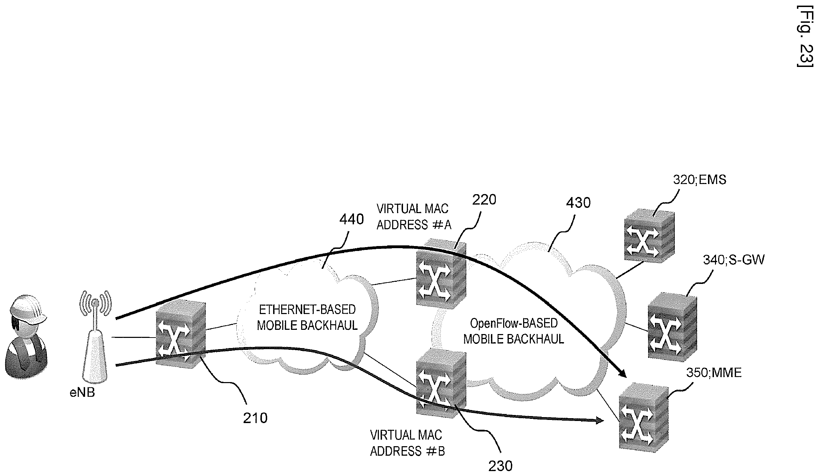

Fig. 23 illustrates a configuration of a communication system according to the fourth exemplary embodiment of the present invention. In Fig. 23, the forwarding nodes 220 to 230 are arranged between an Ethernet-based mobile backhaul 440 and the OpenFlow-based mobile backhaul 430.

In this case, the forwarding node 210 forwards a packet transmitted from the base station (eNB) to the forwarding node 220 or 230, depending on the flow. More specifically, the forwarding node 210 rewrites the MAC address to virtual MAC addresses #A and #B allocated to the forwarding nodes 220 and 230, respectively. In this way, two flow paths via the Ethernet-based mobile backhaul can be controlled.

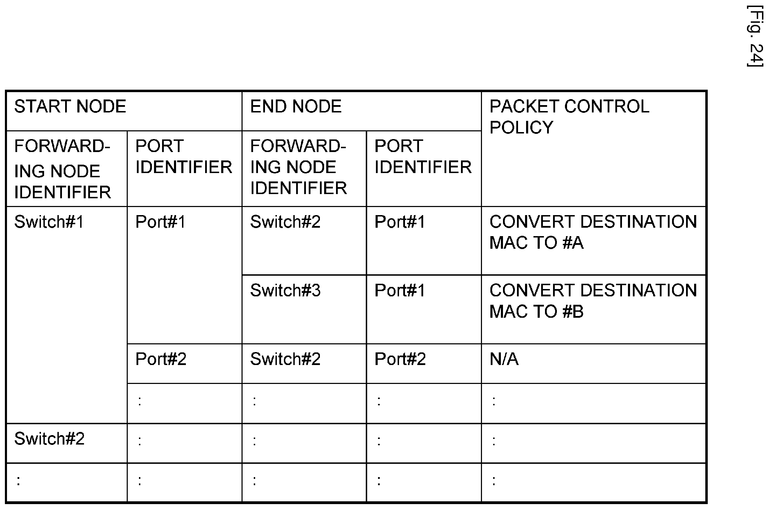

Fig. 24 illustrates information held in a topology management unit 17 in the control apparatus according to the fourth exemplary embodiment of the present invention. In the second exemplary embodiment, a QoS control policy is associated with each of the network topology links held in the topology management unit 17. However, in Fig. 24, destination MAC address conversion contents are associated with each of the network topology links as a packet control policy. In addition, since the topology management unit 17 according to the second exemplary embodiment manages QoS control policies, there is no need to examine a flow direction. However, in the present exemplary embodiment, destination MAC address conversion contents are determined for each flow direction, by using start and end nodes, for example.

The control apparatus according to the present exemplary embodiment refers to such forwarding control policy as illustrated in Fig. 24 and sets a process rule in a forwarding node located at the start node of a certain link, the process rule including a header rewrite action in addition to packet forwarding in accordance with a calculated path.

Thus, as indicated by a bold arrow in Fig. 23, the present exemplary embodiment enables routing control which cannot be executed by simply specifying a forwarding node output port.

While exemplary embodiments of the present invention have thus been described, the present invention is not limited thereto. Further variations, substitutions, or adjustments can be made without departing from the basic technical concept of the present invention. For example, in each of the above exemplary embodiments, forwarding nodes are arranged between mobile backhauls. However, the present invention is generally applicable to a configuration in which forwarding nodes are arranged at edges of other networks.

In addition, in the above exemplary embodiments, packets flowing between a base station (E-UTRAN NodeB (eNB)) and a core apparatus are not encrypted. In such case where no encryption is executed, as described in the above exemplary embodiments, a flow can be identified by using a core apparatus IP address or the like as a key. However, if a gateway device, a typical example of which is a Security Gateway (SeGW), is introduced and a packet is transmitted from a base station to a core apparatus via an encrypted tunnel between the base station and a SeGW, the flow cannot be identified by using a core apparatus IP address or the like as a key as described above. In this case, if the base station or the SeGW is configured to supply the encrypted packet with predetermined identification information for identifying a flow (uniform identification information that does not depend on the type of mobile backhaul to which the base station is connected), when a new base station is established, settings of the base station do not need to be changed depending on the connected mobile backhaul.

Modifications and adjustments of the exemplary embodiments are possible within the scope of the overall disclosure (including claims) of the present invention and based on the basic technical concept of the invention. Various combinations and selections of various disclosed elements are possible within the scope of the claims of the present invention. That is, the present invention of course includes various variations and modifications that could be made by those skilled in the art according to the overall disclosure including the claims and the technical concept.
- 11: node communication unit
- 12: control message process unit
- 13: process rule management unit
- 14: process rule storage unit
- 15: forwarding node management unit
- 16: path and action calculation unit
- 17: topology management unit
- 18: communication terminal location management unit
- 19: QoS control management unit
- 20, 20A: QoS control flow storage unit
- 21: QoS control policy storage unit
- 22: virtual network (VN) information storage unit
- 23: virtual network management unit
- 100, 100A: control apparatus
- 210 to 240: forwarding node
- 250: layer 2 switch
- 310, 315: external node
- 320: Element Management System (EMS)
- 340: Serving Gateway (S-GW)
- 350: Mobility Management Entity (MME)
- 410, 420: mobile backhaul
- 430: OpenFlow-based mobile backhaul
- 440: Ethernet-based mobile backhaul

## Claims

1. A communication system, comprising:
at least one forwarding node (210, 220, 230), arranged between mobile backhauls, processing a received packet in accordance with a process rule in which a matching rule for identifying a flow and a process content applied to a packet coinciding with the matching rule are associated with each other; and
a control apparatus (100) comprising:
a path calculation unit (16) for calculating a packet forwarding path for each flow between a source and destination address;
a forwarding control policy management unit (15, 17, 23) for managing a packet forwarding control policy applied to the at least one forwarding node; and
a storage unit (14, 20, 21, 22) for storing information about the at least one forwarding node (210, 220, 230), the information including at least forwarding control policy information (POLICY#) associated with the at least one forwarding node (210, 220, 230), the forward control policy information containing flow identifiers (FLOW#), the flow identifiers assigned to flows dependent on the source or the destination address,
wherein the control apparatus (100) is configured to set process rules that set a priority of packets to be transmitted using the flow identifiers (FLOW#) in the at least one forwarding node (210, 220, 230) reflecting the contents of the forwarding control policy information for the forwarding nodes (210, 220, 230) in the packet forwarding path calculated by the path calculation unit (16); and
wherein the flow identifiers (FLOW#) represent a degree of priority, based on the source or destination address, that is common between different mobile backhauls.

2. The communication system of claim 1, wherein a plurality of forwarding nodes are arranged as said forwarding node; wherein the forwarding control policy management unit manages a packet forwarding control apparatus applied to a predetermined one of the plurality of forwarding nodes; and wherein the control apparatus sets a process rule reflecting contents of the forwarding control policy in a forwarding node on the calculated path.

3. The communication system according to claim 1 or 2, wherein the forwarding control policy is a packet header rewrite policy.

4. The communication system according to claim 1 to 3, wherein the forwarding control policy comprises a QoS control policy applied to a packet passing through a network connected to the forwarding node, the QoS control policy applied depending on the network.

5. The communication system according to claim 1 to 3, wherein the at least one forwarding node comprises at least a first (210, 220) and a second forwarding node (230) and the forwarding control policy comprises a control policy for ensuring reachability of a packet from one of the first and second nodes (210, 220) to the other forwarding node (230).

6. The communication system according to any one of claims 1 to 5, wherein the forwarding control policy information is determined in association with a link between the forwarding nodes.

7. The communication system according to any one of claims 1 to 6, wherein the forwarding control policy information is determined in association with a port of the forwarding node.

8. The communication system according to any one of claims 1 to 7, wherein the forwarding control policy can be set per virtual network.

9. A control apparatus (100), connected to at least one forwarding node (210, 220, 230), arranged between mobile backhauls, processing a received packet in accordance with a process rule in which a matching rule for identifying a flow and a process content applied to a packet coinciding with the matching rule are associated with each other;
wherein the control apparatus (100) comprises:
a path calculation unit (16) for calculating a packet forwarding path for each flow between a source and destination address;
a forwarding control policy management unit (15, 17, 23) for managing a packet forwarding control policy applied to the at least one forwarding node; and
a storage unit (14, 20, 21, 22) for storing information about the at least one forwarding node (210, 220, 230), the information including at least forwarding control policy information (POLICY#) associated with the at least one forwarding node (210, 220, 230), the forward control policy information containing flow identifiers (FLOW#), the flow identifiers assigned to flows dependent on the source or the destination address;
wherein the control apparatus (100) is configured to set process rules that set a priority of packets to be transmitted using the flow identifiers (FLOW#) in the at least one forwarding node (210, 220, 230) reflecting the contents of the forwarding control policy information for the forwarding nodes (210, 220, 230) in the packet forwarding path calculated by the path calculation unit (16); and
wherein the flow identifiers (FLOW#) represent a degree of priority, based on the source or destination address, that is common between different mobile backhauls.

10. A communication method, comprising the steps of:
using a control apparatus (100), which is connected to at least one forwarding node (210, 220, 230), arranged between mobile backhauls, processing a received packet in accordance with a process rule in which a matching rule for identifying a flow and a process content applied to a packet coinciding with the matching rule are associated with each other and which comprises a forwarding control policy management unit (15, 17, 23) managing a packet forwarding control policy applied to the forwarding node;
calculating, with a path calculation unit (16) of the control apparatus (100), a packet forwarding path for each flow between a source and destination address;
storing, with a storage unit (14, 20, 21, 22) of the control apparatus (100), information about the at least one forwarding node (210, 220, 230) including at least forwarding control policy information (POLICY#) associated with the at least one forwarding node (210, 220, 230), the forward control policy information containing flow identifiers (FLOW#), the flow identifiers assigned to flows dependent on the source or the destination address;
setting a process rule, with the control apparatus (100), that sets a priority of packets to be transmitted using the flow identifiers (FLOW#) in the at least one forwarding node (210, 220, 230) reflecting the contents of the forwarding control policy information for the forwarding nodes (210, 220, 230) in the packet forwarding path calculated by the path calculation unit (16), wherein the flow identifiers (FLOW#) represent a degree of priority, based on the source or destination address, that is common between different mobile backhauls.

11. A program, causing a computer forming a control apparatus (100), which is connected to at least one forwarding node, arranged between mobile backhauls, processing a received packet in accordance with a process rule in which a matching rule for identifying a flow and a process content applied to a packet coinciding with the matching rule are associated to each other and which comprises a forwarding control policy management unit managing a packet forwarding control policy applied to the forwarding node, to execute the process of claim 10.

## Patentansprüche

1. Kommunikationssystem, welches umfasst:
mindestens einen Weiterleitungsknoten (210, 220, 230), der zwischen mobilen Backhauls angeordnet ist, der ein empfangenes Paket gemäß einer Prozessregel verarbeitet, wobei eine Abgleichsregel zum Identifizieren eines Stroms und ein Prozessinhalt, der auf ein Paket, das mit der Abgleichsregel übereinstimmt, angewandt wird, einander zugeordnet werden; und
eine Steuereinrichtung (100), welche umfasst:
eine Wegberechnungseinheit (16) zum Berechnen eines Paketweiterleitungswegs für jeden Strom zwischen einer Quell- und einer Zieladresse;
eine Weiterleitungssteuerungsrichtlinien-Verwaltungseinheit (15, 17, 23) zum Verwalten einer Paketweiterleitungs-Steuerungsrichtlinie, die auf den mindestens einen Weiterleitungsknoten angewandt wird; und
eine Speichereinheit (14, 20, 21, 22) zum Speichern von Informationen über den mindestens einen Weiterleitungsknoten (210, 220, 230), wobei die Informationen zumindest Weiterleitungssteuerungsrichtlinieninformationen (POLICY#) aufweisen, die dem mindestens einen Weiterleitungsknoten (210, 220, 230) zugeordnet sind, wobei die Weiterleitungssteuerungsrichtlinieninformationen Stromkennungen (FLOW#) enthalten, wobei die Stromkennungen abhängig von der Quell- oder Zieladresse Strömen zugewiesen werden,
wobei die Steuereinrichtung (100) dafür ausgelegt ist, Prozessregeln, die eine Priorität von zu übertragenden Paketen einstellen, unter Verwendung der Stromkennungen (FLOW#) in dem mindestens einen Weiterleitungsknoten (210, 220, 230) zu erstellen, die den Inhalt der Weiterleitungssteuerungsrichtlinieninformationen für die Weiterleitungsknoten (210, 220, 230) in dem Paketweiterleitungsweg, der von der Wegberechnungseinheit (16) berechnet worden ist, widerspiegeln; und
wobei die Stromkennungen (FLOW#) einen Prioritätsgrad darstellen, der auf der Quell- oder Zieladresse basiert, der verschiedenen mobilen Backhauls gemeinsam ist.

2. Kommunikationssystem nach Anspruch 1, wobei mehrere Weiterleitungsknoten als der Weiterleitungsknoten angeordnet sind; wobei die Weiterleitungssteuerungsrichtlinien-Verwaltungseinheit eine Paketweiterleitungs-Steuereinrichtung verwaltet, die auf einen vorbestimmten der mehreren Weiterleitungsknoten angewandt wird; und wobei die Steuereinrichtung eine Prozessregel erstellt, die den Inhalt der Weiterleitungssteuerungsrichtlinie in einem Weiterleitungsknoten auf dem berechneten Weg widerspiegelt.

3. Kommunikationssystem gemäß Anspruch 1 oder 2, wobei die Weiterleitungssteuerungsrichtlinie eine Paket-Kopfzeilen-Umschreibrichtlinie ist.

4. Kommunikationssystem gemäß Anspruch 1 bis 3, wobei die Weiterleitungssteuerungsrichtlinie eine QoS-Steuerungsrichtlinie umfasst, die auf ein Paket angewandt wird, das durch ein an den Weiterleitungsknoten angeschlossenes Netz hindurch geht, wobei die angewandte QoS-Steuerungsrichtlinie von dem Netz abhängt.

5. Kommunikationssystem gemäß Anspruch 1 bis 3, wobei der mindestens eine Weiterleitungsknoten mindestens einen ersten (210, 220) und einen zweiten Weiterleitungsknoten (230) umfasst und die Weiterleitungssteuerungsrichtlinie eine Steuerungsrichtlinie zur Sicherstellung einer Erreichbarkeit eines Pakets von einem von dem ersten und dem zweiten Knoten (210, 220) zu dem anderen Weiterleitungsknoten (230) umfasst.

6. Kommunikationssystem gemäß einem der Ansprüche 1 bis 5, wobei die Weiterleitungssteuerungsrichtlinieninformationen im Zusammenhang mit einer Verbindung zwischen den Weiterleitungsknoten bestimmt werden.

7. Kommunikationssystem gemäß einem der Ansprüche 1 bis 6, wobei die Weiterleitungssteuerungsrichtlinieninformationen im Zusammenhang mit einem Anschluss des Weiterleitungsknotens bestimmt werden.

8. Kommunikationssystem gemäß einem der Ansprüche 1 bis 7, wobei die Weiterleitungssteuerungsrichtlinie per virtuellem Netzwerk eingestellt werden kann.

9. Steuereinrichtung (100), die an mindestens einen Weiterleitungsknoten (210, 220, 230) angeschlossen ist, der zwischen mobilen Backhauls angeordnet ist, der ein empfangenes Paket gemäß einer Prozessregel verarbeitet, wobei eine Abgleichsregel zum Identifizieren eines Stroms und ein Prozessinhalt, der auf ein Paket, das mit der Abgleichsregel übereinstimmt, angewandt wird, einander zugeordnet werden;
wobei die Steuereinrichtung (100) umfasst:
eine Wegberechnungseinheit (16) zum Berechnen eines Paketweiterleitungswegs für jeden Strom zwischen einer Quell- und einer Zieladresse;
eine Weiterleitungssteuerungsrichtlinien-Verwaltungseinheit (15, 17, 23) zum Verwalten einer Paketweiterleitungs-Steuerungsrichtlinie, die auf den mindestens einen Weiterleitungsknoten angewandt wird; und
eine Speichereinheit (14, 20, 21, 22) zum Speichern von Informationen über den mindestens einen Weiterleitungsknoten (210, 220, 230), wobei die Informationen zumindest Weiterleitungssteuerungsrichtlinieninformationen (POLICY#) aufweisen, die dem mindestens einen Weiterleitungsknoten (210, 220, 230) zugeordnet sind, wobei die Weiterleitungssteuerungsrichtlinieninformationen Stromkennungen (FLOW#) enthalten, wobei die Stromkennungen abhängig von der Quell- oder Zieladresse Strömen zugeordnet werden;
wobei die Steuereinrichtung (100) dafür ausgelegt ist, Prozessregeln, die eine Priorität von zu übertragenden Paketen einstellen, unter Verwendung der Stromkennungen (FLOW#) in dem mindestens einen Weiterleitungsknoten (210, 220, 230) zu erstellen, die den Inhalt der Weiterleitungssteuerungsrichtlinieninformationen für die Weiterleitungsknoten (210, 220, 230) in dem Paketweiterleitungsweg widerspiegeln, der von der Wegberechnungseinheit (16) berechnet worden ist; und
wobei die Stromkennungen (FLOW#) einen Prioritätsgrad darstellen, der auf der Quell- oder Zieladresse basiert, der verschiedenen Backhauls gemeinsam ist.

10. Kommunikationsverfahren, welches die folgenden Schritte umfasst:
Verwenden einer Steuereinrichtung (100), die an mindestens einen Weiterleitungsknoten (210, 220, 230) angeschlossen ist, der zwischen mobilen Backhauls angeordnet ist, der ein empfangenes Paket gemäß einer Prozessregel verarbeitet, wobei eine Abgleichsregel zum Identifizieren eines Stroms und ein Prozessinhalt, der auf ein Paket, das mit der Abgleichsregel übereinstimmt, angewandt wird, einander zugeordnet werden, und die eine Weiterleitungssteuerungsrichtlinien-Verwaltungseinheit (15, 17, 23) umfasst, die eine Paketweiterleitungssteuerungsrichtlinie verwaltet, die auf den Weiterleitungsknoten angewandt wird;
Berechnen, mit einer Wegberechnungseinheit (16) der Steuereinrichtung (100), eines Paketweiterleitungswegs für jeden Strom zwischen einer Quell- und einer Zieladresse;
Speichern, mit einer Speichereinheit (14, 20, 21, 22) der Steuereinrichtung (100), von Informationen über den mindestens einen Weiterleitungsknoten (210, 220, 230), die zumindest Weiterleitungssteuerungsrichtlinieninformationen (POLICY#) aufweisen, die dem mindestens einen Weiterleitungsknoten (210, 220, 230) zugeordnet sind, wobei die Weiterleitungssteuerungsrichtlinieninformationen Stromkennungen (FLOW#) enthalten, wobei die Stromkennungen abhängig von der Quell- oder Zieladresse Strömen zugewiesen werden;
Erstellen einer Prozessregel, mit der Steuereinrichtung (100), die unter Verwendung der Stromkennungen (FLOW#) in dem mindestens einen Weiterleitungsknoten (210, 220, 230) eine Priorität von zu übertragenden Paketen einstellt, die den Inhalt der Weiterleitungssteuerungsrichtlinieninformationen für die Weiterleitungsknoten (210, 220, 230) in dem Paketweiterleitungsweg widerspiegelt, der von der Wegberechnungseinheit (16) berechnet worden ist, wobei die Stromkennungen (FLOW#) einen Prioritätsgrad darstellen, der auf der Quell- oder Zieladresse basiert, der verschiedenen mobilen Backhauls gemeinsam ist.

11. Programm, welches einen Computer, der eine Steuereinrichtung (100) bildet, die an mindestens einen Weiterleitungsknoten angeschlossen ist, der zwischen mobilen Backhauls angeordnet ist, der ein empfangenes Paket gemäß einer Prozessregel verarbeitet, wobei eine Abgleichsregel zum Identifizieren eines Stroms und ein Prozessinhalt, der auf ein Paket, das mit der Abgleichsregel übereinstimmt, angewandt wird, einander zugeordnet werden, und die eine Weiterleitungssteuerungsrichtlinien-Verwaltungseinheit zum Verwalten einer Paketweiterleitungs-Steuerungsrichtlinie, die auf den Weiterleitungsknoten angewandt wird, umfasst, veranlasst, den Prozess nach Anspruch 10 auszuführen.

## Revendications

1. Système de communication, comprenant :
au moins un noeud de transmission (210, 220, 230), disposé entre des liaisons mobiles traitant un paquet reçu selon une règle de traitement dans laquelle une règle de correspondance permettant d'identifier un flux et un contenu de traitement appliqués à un paquet coïncidant avec la règle de correspondance sont mutuellement associés ; et
un appareil de commande (100) comprenant :
une unité de calcul de voie (16) permettant de calculer une voie de transmission de paquet pour chaque flux parmi une adresse source et une adresse de destination ;
une unité de gestion de police de commande de transmission (15, 17, 23) permettant de gérer une police de commande de transmission de paquet appliquée à l'au moins un noeud de transmission ; et
une unité de stockage (14, 20, 21, 22) servant à stocker des informations concernant l'au moins un noeud de transmission (210, 220, 230), les informations comprenant au moins la transmission d'informations de police de commande de transmission (POLICY#) associée à l'au moins un noeud de transmission (210, 220, 230), les informations de police de commande de transmission contenant des identifiants de flux (FLOW#), les identifiants de flux attribués aux flux dépendant de l'adresse de source ou de destination,
l'appareil de commande (100) étant configuré pour établir des règles de traitement qui établissent une priorité de paquets à transmettre à l'aide des identifiants de flux (FLOW#) dans l'au moins un noeud de transmission (210, 220, 230) reflétant le contenu des informations de police de commande de transmission pour les noeuds de transmission (210, 220, 230) dans la voie de transmission de paquet calculée par l'unité de calcul de voie (16) ; et
les identifiants de flux (FLOW#) représentant un degré de priorité, en fonction de l'adresse de source ou de destination, qui est commun entre différentes liaisons mobiles.

2. Système de communication selon la revendication 1, dans lequel une pluralité de noeuds de transmission sont disposés sous forme de noeud de transmission ; l'unité de gestion de police de commande de transmission gérant un appareil de commande de transmission de paquet appliqué à une pluralité prédéfinie de la pluralité de noeuds de transmission ; et l'appareil de commande établissant une règle de processus reflétant le contenu de la police de commande de transmission dans un noeud de transmission sur la voie calculée.

3. Système de communication selon la revendication 1 ou 2, dans lequel la police de commande de transmission est une police de réécriture d'en-tête de paquet.

4. Système de communication selon la revendication 1 à 3, dans lequel la police de commande de transmission comprend une police de commande de QoS appliquée à un paquet traversant un réseau connecté au noeud de transmission, la police de commande de QoS appliquée dépendant du réseau.

5. Système de communication selon la revendication 1 à 3, dans lequel l'au moins un noeud de transmission comprend au moins un premier (210, 220) et un second noeud (230) de transmission et où la police de commande de transmission comprend une police de commande permettant de garantir l'accessibilité d'un paquet à partir du premier ou du second noeud (210, 220) pour l'autre noeud de transmission (230).

6. Système de communication selon l'une quelconque des revendications 1 à 5, dans lequel l'information de police de commande de transmission est déterminée en association avec un lien entre les noeuds de transmission

7. Système de communication selon l'une quelconque des revendications 1 à 6, dans lequel l'information de police de commande de transmission est déterminée en association avec un port du noeud de transmission.

8. Système de communication selon l'une quelconque des revendications 1 à 7, dans lequel la police de commande de transmission peut être établie par réseau virtuel.

9. Appareil de commande (100), connecté à au moins un noeud de transmission (210, 220, 230), disposé entre des liaisons mobiles, traitant un paquet reçu selon une règle de processus dans laquelle une règle de correspondance, permettant d'identifier un flux et un contenu de processus appliqués à un paquet coïncidant avec la règle de correspondance, sont mutuellement associées ;
l'appareil de commande (100) comprenant :
une unité de calcul de voie (16) permettant de calculer une voie de transmission de paquet pour chaque flux parmi une adresse source et une adresse de destination ;
une unité de gestion de police de commande de transmission (15, 17, 23) permettant de gérer une police de commande de transmission de paquet appliquée à l'au moins un noeud de transmission ; et
une unité de stockage (14, 20, 21, 22) servant à stocker des informations concernant l'au moins un noeud de transmission (210, 220, 230), les informations comprenant au moins la transmission d'informations de police de commande de transmission (POLICY#) associée à l'au moins un noeud de transmission (210, 220, 230), les informations de police de commande de transmission contenant des identifiants de flux (FLOW#), les identifiants de flux attribués aux flux dépendant de l'adresse de source ou de destination,
l'appareil de commande (100) étant configuré pour établir des règles de traitement qui établissent une priorité de paquets à transmettre à l'aide des identifiants de flux (FLOW#) dans l'au moins un noeud de transmission (210, 220, 230) reflétant le contenu des informations de police de commande de transmission pour les noeuds de transmission (210, 220, 230) dans la voie de transmission de paquet calculée par l'unité de calcul de voie (16) ; et
les identifiants de flux (FLOW#) représentant un degré de priorité, en fonction de l'adresse de source ou de destination, qui est commun entre différentes liaisons mobiles.

10. Procédé de communication, comprenant les étapes suivantes :
l'utilisation d'un appareil de commande (100) qui est connecté à au moins un noeud de transmission (210, 220, 230), disposé entre des liaisons mobiles,
le traitement d'un paquet reçu selon une règle de procédé, dans laquelle une règle de correspondance, permettant d'identifier un flux et un contenu de processus appliqués à un paquet coïncidant avec la règle de correspondance, sont mutuellement associés, et qui comprend une unité de gestion de police de commande de transmission (15, 17, 23) gérant une police de commande de transmission de paquet appliquée au noeud de transmission ;
le calcul, à l'aide d'une unité de calcul de voie (16) de l'appareil de commande (100) d'une voie de transmission de paquet pour chacune des adresses parmi une adresse de source et une adresse de destination ;
le stockage, à l'aide d'une unité de stockage (14, 20, 21, 22) de l'appareil de commande (100), d'informations concernant l'au moins un noeud de transmission (210, 220, 230) comprenant au moins des informations de police de commande de transmission (POLICY#) associées à l'au moins un noeud de transmission (210, 220, 230), les informations de police de commande contenant des identifiants de flux (FLOW#), les identifiants de flux attribués aux flux dépendant de l'adresse de source ou de destination ;
l'établissement d'une règle de traitement, avec l'appareil de commande (100), qui établit une priorité de paquets à transmettre à l'aide des identifiants de flux (FLOW#) dans l'au moins un noeud de transmission (210, 220, 230) reflétant le contenu des informations de police de commande de transmission pour les noeuds de transmission (210, 220, 230) dans la voie de transmission de paquet calculée par l'unité de calcul de voie (16), les identifiants de flux (FLOW#) représentant un degré de priorité, en fonction de l'adresse de source ou de destination, qui est commun entre différentes liaisons mobiles.

11. Programme, amenant un ordinateur formant un appareil de commande (100), qui est connecté à au moins un noeud de transmission, disposé entre des liaisons mobiles, à traiter un paquet reçu selon une règle de processus dans laquelle une règle de correspondance, permettant d'identifier un flux et un contenu de processus appliqués à un paquet coïncidant avec la règle de correspondance sont mutuellement associés, et qui comprend une unité de gestion de police de transmission gérant une police de commande de transmission de paquet appliquée au noeud de transmission, pour exécuter le processus de la revendication 10.
